# EUROPÄISCHE PATENTSCHRIFT

(11) **EP 4 555 224 B1**
(45) Veröffentlichungstag und Bekanntmachung des Hinweises auf die Patenterteilung: **04.11.2026**
(21) Anmeldenummer: 23776321.4
(22) Anmeldetag: 21.09.2023
(51) Int. Cl.: F16B 12/20

(54) **BESCHLAG ZUM VERBINDEN ZWEIER MÖBELPLATTEN UND ZUGEHÖRIGE MÖBELANORDNUNG**
FITTING FOR CONNECTING TWO FURNITURE PANELS, AND CORRESPONDING FURNITURE ASSEMBLY
FERRURE POUR RELIER DEUX PANNEAUX DE MEUBLE, ET ENSEMBLE MEUBLE CORRESPONDANT

(30) Priorität: 28.09.2022 DE 202022105446 U
(43) Veröffentlichungstag der Anmeldung: 21.05.2025
(73) Patentinhaber: Häfele Berlin GmbH & Co KG, 12307 Berlin (DE)
(72) Erfinder: BIRKNER, Robert, 12524 Berlin (DE); LEISTERT, Peer, 15566 Schöneiche (DE)
(74) Vertreter: Kohler Schmid Möbus Patentanwälte
(86) Internationale Anmeldenummer: PCT/EP2023/076001
(87) Internationale Veröffentlichungsnummer: WO 2024/068407

(56) Entgegenhaltungen:
- WO-A1-87/00251
- DE-U1- 202017 102 763
- US-A- 4 571 115
- US-A1- 2016 111 818

## Beschreibung

Die Erfindung betrifft ein Beschlagteil eines Beschlags zum Verbinden zweier Teile, insbesondere Möbelplatten, mit einem stangenförmigen Beschlaggehäuse, das mindestens zwei axial beabstandete Schlüssellöcher mit jeweils einer Einführöffnung zum Einführen eines Bolzenkopfes und mit einem sich in einer Umfangsrichtung einseitig an die Einführöffnung anschließenden, gegenüber der Einführöffnung verengten Umfangsschlitz zum Hintergreifen eines Bolzenkopfes sowie eine Drehhandhabe aufweist, wobei eine den Umfangsschlitz definierende Schlitzwand des Beschlaggehäuses innenseitig eine Anzugskontur aufweist, deren Abstand zur Längsachse des Beschlaggehäuses in der Umfangsrichtung abnimmt, wobei das Beschlaggehäuse aus mehreren Modulen zusammengesetzt, insbesondere zusammengesteckt ist, von denen zumindest einige, insbesondere alle, jeweils mindestens ein Schlüsselloch mit Anzugskontur aufweisen. Die Erfindung betrifft auch einen zugehörigen Beschlag und eine zugehörige Anordnung mit zwei Teilen, die mittels des Beschlags miteinander verbunden sind.

Ein solches Beschlagteil mit einem stangenförmigen Beschlaggehäuse, das zwei axial beabstandete Schlüssellöcher und eine innenseitige Anzugskontur aufweist, ist beispielsweise aus US 2016/111818 A1 bekannt geworden.

Beschläge zum Verbinden zweier Teile sind hinreichend bekannt, z.B. in Form von Häfele Minifix^{®}-Exzenterverbindern. Der Häfele Minifix^{®}-Exzenterverbinder besteht aus einem Exzenter genannten zylinderförmigen Gehäuse, das mit einem Kreuzschlitz oder einem Innensechskant an der Stirnseite versehen ist, sowie einem Bolzen mit Schraubenende und pilzförmigem Kopf. Das zylinderförmige Teil übernimmt dabei die Funktion einer Klaue, die das pilzförmige Ende des Bolzens erfasst und zu sich hin zieht. Die Klaue ist als schraubenförmiger radialer Schlitz ausgeführt. Die Greifbewegung erfolgt durch Drehen des zylinderförmigen Teiles mittels eines Schraubenziehers oder Innensechskantschlüssels am offen liegenden, flachen Ende des Gehäuses. Die beiden zu verbindenden Möbelplatten müssen mit Bohrungen vorbereitet sein. Für die Plattenverbindung sind mehrere Exzenterverbinder erforderlich, wobei je Exzenterverbinder in der einen Möbelplatten zwei, in der anderen Möbelplatte eine benötigt werden.

Weiterhin offenbart DE 20 2017 102763 U1 einen Verbindungsbeschlag mit einem an einem ersten Möbelteil zu befestigenden, ersten Beschlagteil, das einen Spreizdübel mit einem Spreizteil aufweist, und mit einem an einem zweiten Möbelteil zu befestigenden, zweiten Beschlagteil, das am ersten Beschlagteil schwenkbar zwischen einer gegenüber dem Spreizdübel abgewinkelten Ausgangsstellung und einer nicht-abgewinkelten Spannstellung, in welcher der Spreizdübel vom Spreizteil weiter als in der Ausgangsstellung aufgespreizt ist, gelagert. Das Spreizteil ist als ein Spreizbolzen mit einem über den Spreizdübel vorstehenden Bolzenkopf ausgebildet. Das zweite Beschlagteil ist auf dem Bolzenkopf schwenkbar zwischen der Ausgangs-und der Spannstellung gelagert und weist eine bezüglich der Schwenkachse exzentrische Spannkontur auf, die mit dem ersten Beschlagteil oder dem ersten Möbelteil zusammenwirkt. Das zweite Beschlagteil ist als Halteteil einer Frontblendenbefestigung ausgeführt.

Demgegenüber liegt der vorliegenden Erfindung die Aufgabe zugrunde, einen möglichst einfach aufgebauten Beschlag zum Verbinden zweier Teile anzugeben, der möglichst wenig Einzelteile aufweist und der weniger Bohrungen in den beiden zu verbindenden Teilen und weniger Montageaufwand erfordert.

Diese Aufgabe wird erfindungsgemäß bei einem Beschlagteil der eingangs genannten Art dadurch gelöst, dass die Module jeweils einen Steckzapfen am einen Modulende und eine Stecköffnung am gegenüberliegenden anderen Modulende aufweisen.

Um möglichst viele unterschiedliche Varianten mit verschiedenen Anzahlen an Bolzen und Querbohrungen realisieren zu können, ist das erfindungsgemäße Beschlaggehäuse aus mehreren Modulen zusammengesetzt, insbesondere zusammengesteckt, von denen zumindest einige, insbesondere alle, jeweils mindestens ein Schlüsselloch mit Anzugskontur aufweisen. Die einzelnen Module können gleiche oder unterschiedlichen Längen, auf unterschiedlichen Höhen angeordnete Schlüssellöcher und eine unterschiedliche Anzahl an Schlüssellöchern, jeweils mit und ohne Verrastung, aufweisen.

Vorzugsweise weist das Beschlaggehäuse einen kreisrunden Außendurchmesser auf, der dem Durchmesser der Tieflochbohrung entspricht, wodurch das Beschlagteil in der Tieflochbohrung drehbar gelagert ist. Das Beschlaggehäuse kann beispielsweise ein einteiliges Gussteil aus Metall oder Kunststoff sein. Die Anzugskontur weist vorteilhaft einen Anzugsdrehweg zwischen 90° und 180°, insbesondere von ca. 140°, auf.

In besonders bevorzugten Ausführungsformen der Erfindung ist an den Einführöffnungen, insbesondere an einer der beiden axialen Seiten der Einführöffnungen, jeweils eine elastisch auslenkbare Rastzunge vorhanden, deren freies, vorderes Ende seitlich weiter in die Einführöffnung hineinragt als ein dahinterliegender Abschnitt der Rastzunge. Durch diese Maßnahme kann ein in die Einführöffnung eingeführter Bolzenkopf in der Einführöffnung zurückgehalten bzw. verrastet werden, was die Montage der beiden zu verbindenden Teile erleichtert. Die Rastzungen können beispielsweise einteilig am Beschlaggehäuse ausgebildet, insbesondere angeformt sein oder aber jeweils an einem separaten Rastelement aus Kunststoff ausgebildet, insbesondere angeformt sein. Im letzteren Fall kann das Beschlaggehäuse an einer der beiden axialen Seiten der Einführöffnungen jeweils eine radial nach außen offene, in die jeweilige Einführöffnung mündende Aussparung aufweisen, in die das Rastelement eingesetzt ist. Das vordere Ende der Rastzunge ist bevorzugt durch einen Rastvorsprung gebildet, der über den dahinterliegenden Abschnitt der Rastzunge in die Einführöffnung vorsteht.

Die Erfindung betrifft auch einen Beschlag zum Verbinden zweier Teile, insbesondere Frontblendenbeschlag, mit einem wie oben ausgebildeten Beschlagteil und mit mindestens zwei Bolzen, die einen gegenüber einem angrenzenden Schaftabschnitt verbreiterten, vorderen Bolzenkopf aufweisen. Zusätzlich kann der Beschlag auch noch mindestens zwei Muffen aufweisen, in denen die hinteren Bolzenköpfe der Bolzen jeweils verankerbar sind.

Die Erfindung betrifft schließlich auch eine Anordnung mit zwei Teilen, insbesondere Möbelplatten, die mittels des wie oben ausgebildeten Beschlags aneinander befestigt sind, wobei die Bolzen an dem einen, ersten Teil verankert sind und wobei das andere Teil eine Tieflochbohrung, in die das Beschlagteil eingesetzt ist, und Querbohrungen, die einenends in eine Stirnseite des zweiten Teils und anderenends in die Tieflochbohrung münden, aufweist und wobei die durch die Querbohrungen hindurch bis in die Einführöffnungen des Beschlaggehäuses eingeführten, vorderen Bolzenköpfe von der Anzugskontur des Beschlaggehäuses weiter nach innen gezogen sind und dadurch die beiden Teile miteinander verspannt sind.

Weitere Vorteile der Erfindung ergeben sich aus der Beschreibung, den Ansprüchen und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Frontblendenanbindung mittels eines Beschlags in einer teilweise aufgebrochenen, perspektivischen Innenansicht auf eine Seitenwand und eine Frontblende;
- Fign. 2a, 2b: ein in Fig. 1 gezeigtes, einteiliges Beschlagteil des Beschlags in zwei unterschiedlichen perspektivischen Ansichten;
- Fign. 3a, 3b: den in Fig. 1 gezeigten Beschlag im nichtangezogenen Zustand in einer perspektivischen Ansicht (Fig. 3a) und in einer Schnittansicht (Fig. 3b) gemäß IIIb-IIIb in Fig. 3a;
- Fign. 4a, 4b: den in Fig. 1 gezeigten Beschlag im angezogenen Zustand in einer perspektivischen Ansicht (Fig. 4a) und in einer Schnittansicht (Fig. 4b) gemäß IVb-IVb in Fig. 4a;
- Fign. 5a, 5b: ein gegenüber Fign. 2a, 2b modifiziertes, mehrteiliges Beschlagteil des Beschlags in einer perspektivischen Ansicht (Fig. 5a) und in einer Explosionsansicht (Fig. 5b);
- Fig. 6: ein in Fign. 5a, 5b gezeigtes Rastelement in einer Seitenansicht;
- Fig. 7: ein gegenüber Fign. 2a, 2b modifiziertes, einteiliges Beschlagteil des Beschlags in einer perspektivischen Ansicht;
- Fig. 8: ein aus mehreren Modulen zusammengesetztes Beschlagteil eines erfindungsgemäßen Beschlags in einer perspektivischen Ansicht; und
- Fig. 9: eines der in Fig. 8 gezeigten Module in einer perspektivischen Ansicht.

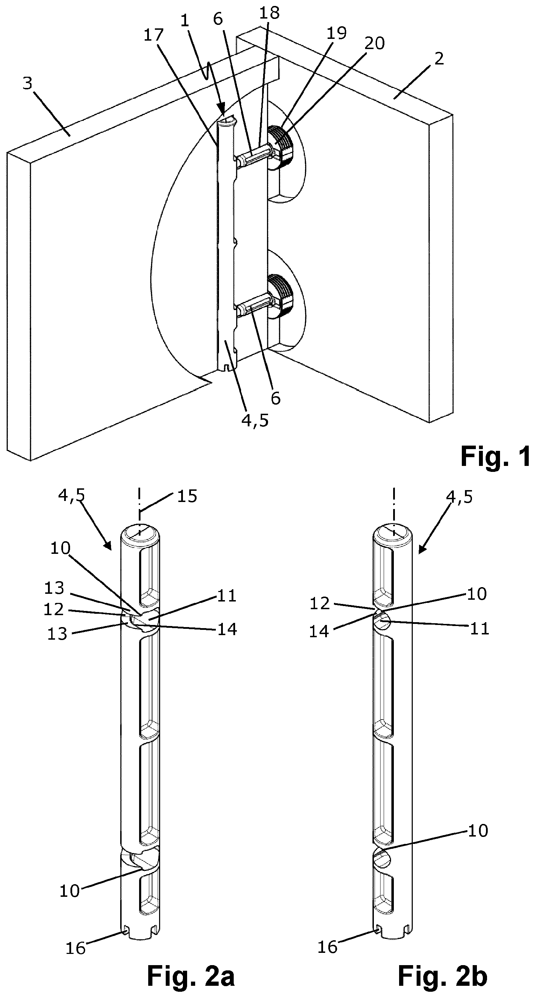

Der in **Fig. 1** gezeigte Beschlag (Frontverbinder) **1** dient hier lediglich beispielhaft zum Anbinden einer Frontblende **2** an zwei Seitenwänden **3** eines frontseitig offenen Schubkastens (z.B. Schublade). Der Beschlag 1 umfasst ein in **Fign. 2a, 2b** gezeigtes Beschlagteil **4** in Form eines einteiligen Beschlaggehäuses **5** aus Metall (z.B. Zink) oder Kunststoff sowie mehrere, hier zwei Bolzen **6.**

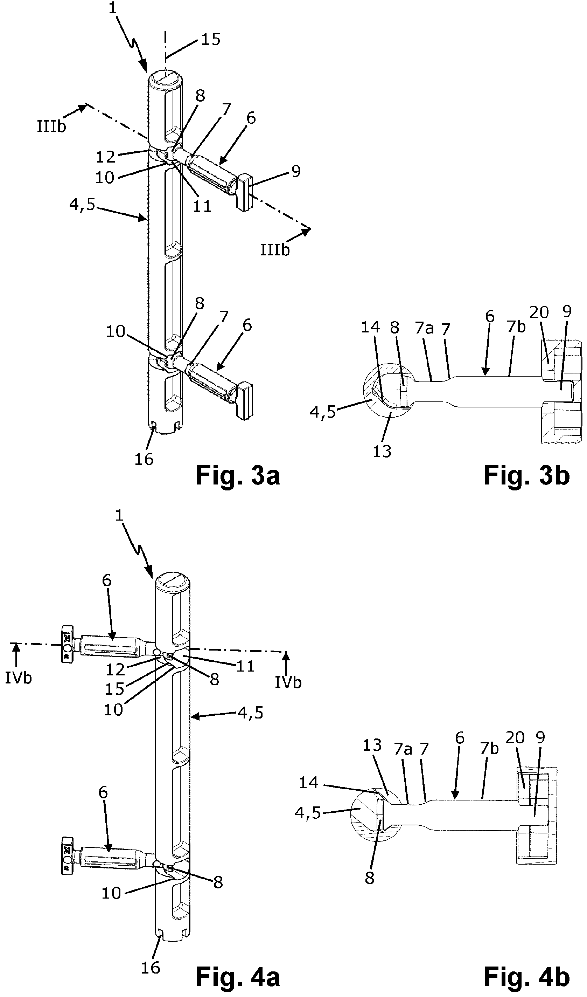

Wie in **Fign. 3a, 3b** gezeigt, haben die Bolzen 6 jeweils einen hier gestuften Bolzenschaft **7** mit einem dünnen, vorderen Schaftabschnitt **7a** und einem dicken, hinteren Schaftabschnitt **7b** sowie einen gegenüber dem vorderen Schaftabschnitt 7a verbreiterten, vorderen Bolzenkopf **8** und einen gegenüber dem hinteren Schaftabschnitt 7b verbreiterten, hier T-förmigen, hinteren Bolzenkopf **9.**

Das Beschlaggehäuse 5 ist stangenförmig mit einem kreisrunden Außendurchmesser ausgebildet und weist zwei axial beabstandete Schlüssellöcher **10** mit jeweils einer Einführöffnung **11** zum Einführen des vorderen Bolzenkopfes 8 und mit einem sich in einer Umfangsrichtung einseitig an die Einführöffnung 11 anschließenden, gegenüber der Einführöffnung 11 verengten Umfangsschlitz **12** zum Hintergreifen des vorderen Bolzenkopfes 8 auf. Für den gezeigten Beispielfall, dass der vordere Schaftabschnitt 7a und der vordere Bolzenkopf 8 jeweils einen kreisrunden Querschnitt aufweisen, ist die Schlitzbreite des Umfangsschlitzes 12 also größer als der Durchmesser des vorderen Schaftabschnitts 7a und kleiner als der Durchmesser des vorderen Bolzenkopfes 8. Die den Umfangsschlitz 12 definierende Schlitzwand **13** des Beschlaggehäuses 5 weist innenseitig eine Anzugskontur **14** auf, deren Abstand zur Längsachse (Drehachse) **15** des Beschlaggehäuses 5 in der Umfangsrichtung - in Fig. 3b gesehen im Uhrzeigersinn - auf einem Anzugsdrehweg von z.B. 140° abnimmt. An dem in Fign. 2a, 2b unteren Längsende weist das Beschlaggehäuse 5 eine Drehhandhabe **16,** hier in Form eines Kreuzschlitzes, für ein Werkzeug auf.

Die Montage der Frontblende 2 an einer Seitenwände 3 mittels des Frontblendenbeschlags 1 ist wie folgt.

Das Beschlagteil 4 wird in eine unterseitig offene Tieflochbohrung **17** (Bohrungsdurchmesser: z.B. 8 mm) der Seitenwand 3, deren Durchmesser geringfügig größer als der Außendurchmesser des Beschlaggehäuses 5 ist, eingesetzt. Die Seitenwand 3 hat außerdem zwei Querbohrungen **18,** die einenends in die Stirnseite der Seitenwand 3 und anderenends in die Tieflochbohrung 17 münden. Der Durchmesser der Querbohrungen 18 ist geringfügig größer als der Schaftdurchmesser der Bolzen 6, hier also als der Schaftdurchmesser des dicken, hinteren Schaftabschnitts 7b.

Die Frontblende 2 hat rückseitig zwei in Höhenrichtung übereinander angeordnete Sackbohrungen **19,** in die jeweils eine Muffe **20** eingepresst ist. Die Bolzen 6 sind jeweils mittels eines Steckdrehverschlusses an den Muffen 20 befestigt, indem der T-förmige hintere Bolzenkopf 9 in eine Steckbohrung der Muffe 20 eingesteckt und dann um 90° verdreht wird, um eine die Stecköffnung ausbildende stirnseitige Muffenwand entgegen der Steckrichtung zu hintergreifen. Vorzugsweise ist der hintere Bolzenkopf 9 in der Muffe 20 in Höhen- und Seitenrichtung verschiebbar, um so eine Höhen- und Seitenjustierung der Frontblende 2 gegenüber den Bolzen 6 und damit der Seitenwand 2 zu ermöglichen. Statt des Steckdrehverschlusses kann der Bolzen 6 aber auch in die Muffe 20 eingeschraubt sein; hierfür weist der hintere Bolzenkopf 9 ein Gewinde auf, das in ein Gegengewinde der Muffe 20 eingeschraubt wird. Auch kann der hintere Bolzenkopf 9 direkt in einer Öffnung der Muffe 20 verankert, z.B. eingepresst, eingeschraubt oder eingeklebt, sein oder ohne Muffe direkt eingeschraubt werden.

Die Frontblende 2 wird an die Seitenwand 3 angesetzt, wobei die vorderen Bolzenköpfe 8 zunächst in die Querbohrungen 18 und dann weiter bis in die Einführöffnungen 11 des Beschlaggehäuses 5 eingeführt werden (Fign. 3a, 3b). Anschließend wird das Beschlagteil 4 in der Tieflochbohrung 17 mithilfe der Drehhandhabe 16 um z.B. 140° gedreht, wodurch der vordere Bolzenkopf 8 von der Anzugskontur 14 der Schlitzwand 13 hintergriffen und weiter nach innen gezogen wird **(****Fign. 4a****,** **4b****),** bis schließlich die Frontblende 2 und die Seitenwand 3 miteinander verspannt ist.

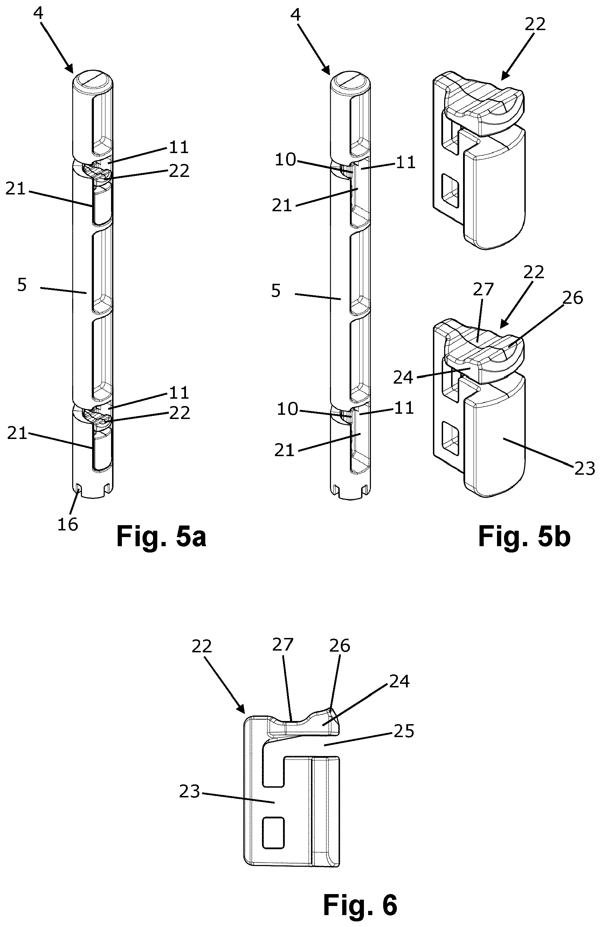

Vom Beschlaggehäuse der Fign. 2a, 2b unterscheidet sich das in **Fign. 5a, 5b** gezeigte Beschlaggehäuse 5 durch zwei zusätzliche, radial nach außen offene Aussparungen **21,** die jeweils an einer der beiden axialen Seiten der Einführöffnungen 11, hier unterhalb der Einführöffnungen 11, angeordnet sind und in die Einführöffnungen 11 münden. In die Aussparungen 21 ist jeweils ein Rastelement **22** aus z.B. Kunststoff eingesetzt, das zum Verrasten des Bolzens 6 in der Einführöffnung 11 dient.

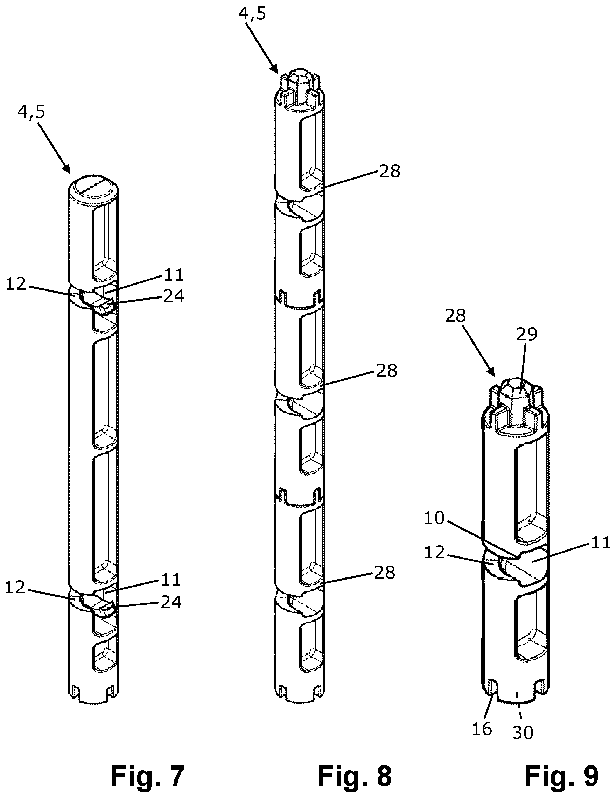

Wie in **Fig. 6** gezeigt, weist das Rastelement 22 einen Grundkörper **23** zum Einsetzen in die Aussparung 21 und eine oben und rückseitig am Grundkörper 23 angeformte Rastzunge **24** auf. Die Rastzunge 24 ist - aufgrund eines zwischen Grundkörper 23 und Rastzunge 24 vorhandenen Spalts **25** - nach unten elastisch auslenkbar und hat an ihrem freien vorderen Ende einen oberseitigen Rastvorsprung **26,** der über die dahinterliegende, z.B. muldenförmige Oberseite **27** der Rastzunge 24 hochsteht. Wenn das Rastelement 22 in die Aussparung 21 eingesetzt ist, ragt der Rastvorsprung 24 seitlich in die Einführöffnung 11 hinein. Beim Einführen des vorderen Bolzenkopfs 8 in die Einführöffnung 11 wird der Rastvorsprung 26 bzw. die Rastzunge 24 durch den vorderen Bolzenkopf 8 nach unten elastisch ausgelenkt, um dann, wenn der vordere Bolzenkopf 8 vorbeigeschoben ist, wieder zurück nach oben zu schwenken und den vorderen Bolzenkopf 8 zu hintergreifen und somit in der Einführöffnung 11 zu verrasten bzw. zurückzuhalten. Anders als in Fign. 5a, 5b sind bei dem in **Fig. 7** gezeigten Beschlagteil 4 die Rastzungen 24 nicht an separaten Rastelementen, sondern direkt am Beschlaggehäuse 5 angeformt.

**Fig. 8** zeigt eine modulare Ausführung des Beschlagteils 4 bzw. Beschlaggehäuses 5, das aus mehreren der in **Fig. 9** gezeigten Module **28** zusammengesteckt (vorzugsweise verrastet) ist. Vom Beschlagteil 4 bzw. Beschlaggehäuse 5 der Fign. 2a, 2b unterscheidet sich das Modul 28 lediglich durch seine kürzere Länge und dadurch, dass es nur ein einziges Schlüsselloch 10 sowie einen Steckzapfen **29** am oberen Ende und eine Stecköffnung **30** am unteren Ende aufweist. Für verschiedene Anzahlen an Bolzen 6 und Querbohrungen 18 werden entsprechend mehrere gleiche Module 28 zusammengesteckt.

Statt nur gleicher Module 28 wie in Fig. 8, können auch Module mit unterschiedlichen Längen, mit auf unterschiedlichen Höhen angeordneten Schlüssellöchern 10 und mit unterschiedlicher Anzahl an Schlüssellöchern 10, sowie auch ohne ein Schlüsselloch zusammengesteckt werden, um so unterschiedliche Bohrabstände der Querbohrungen 18 und auch unterschiedliche Anzahlen an Querbohrungen 18 zu realisieren.

## Patentansprüche

1. Beschlagteil (4) eines Beschlags (1) zum Verbinden zweier Teile (2, 3), insbesondere Möbelplatten, mit einem stangenförmigen Beschlaggehäuse (5), das mindestens zwei axial beabstandete Schlüssellöcher (10) mit jeweils einer Einführöffnung (11) zum Einführen eines Bolzenkopfes und mit einem sich in einer Umfangsrichtung einseitig an die Einführöffnung (11) anschließenden, gegenüber der Einführöffnung (11) verengten Umfangsschlitz (12) zum Hintergreifen eines Bolzenkopfes sowie eine Drehhandhabe (16) aufweist, wobei eine den Umfangsschlitz (12) definierende Schlitzwand (13) des Beschlaggehäuses (5) innenseitig eine Anzugskontur (14) aufweist, deren Abstand zur Längsachse (15) des Beschlaggehäuses (5) in der Umfangsrichtung abnimmt, wobei das Beschlaggehäuse (5) aus mehreren Modulen (28) zusammengesetzt, insbesondere zusammengesteckt ist, von denen zumindest einige, insbesondere alle, jeweils mindestens ein Schlüsselloch (10) mit Anzugskontur (14) aufweisen, und **dadurch gekennzeichnet, dass** die Module (28) jeweils einen Steckzapfen (29) am einen Modulende und eine Stecköffnung (30) am gegenüberliegenden anderen Modulende aufweisen.

2. Beschlagteil nach Anspruch 1, **dadurch gekennzeichnet, dass** das Beschlaggehäuse (5) einen kreisrunden Außendurchmesser aufweist.

3. Beschlagteil nach einem der vorhergehenden Ansprüche, **dadurch gekennzeichnet, dass** das Beschlaggehäuse (5) ein einteiliges Gussteil aus Metall oder Kunststoff ist.

4. Beschlagteil nach einem der vorhergehenden Ansprüche, **dadurch gekennzeichnet, dass** die Anzugskontur (14) einen Anzugsdrehweg zwischen 90° und 180°, insbesondere von ca. 140°, aufweist.

5. Beschlagteil nach einem der vorhergehenden Ansprüche, **dadurch gekennzeichnet, dass** an den Einführöffnungen (11), insbesondere an einer der beiden axialen Seiten der Einführöffnungen (11), jeweils eine elastisch auslenkbare Rastzunge (24) vorhanden ist, deren freies, vorderes Ende (26) seitlich weiter in die Einführöffnung (11) hineinragt als ein dahinterliegender Abschnitt (27) der Rastzunge (24).

6. Beschlagteil nach Anspruch 5, **dadurch gekennzeichnet, dass** die Rastzungen (24) einteilig am Beschlaggehäuse (5) ausgebildet, insbesondere angeformt sind.

7. Beschlagteil nach Anspruch 5, **dadurch gekennzeichnet, dass** die Rastzungen (24) jeweils an einem separaten Rastelement (22) aus Kunststoff ausgebildet, insbesondere angeformt sind.

8. Beschlagteil nach Anspruch 7, **dadurch gekennzeichnet, dass** das Beschlaggehäuse (5) an einer der beiden axialen Seiten der Einführöffnungen (11) jeweils eine radial nach außen offene, in die jeweilige Einführöffnung (11) mündende Aussparung (21) aufweist, in die das Rastelement (22) eingesetzt ist.

9. Beschlagteil nach einem der Ansprüche 5 bis 8, **dadurch gekennzeichnet, dass** das vordere Ende (26) der Rastzunge (24) durch einen Rastvorsprung gebildet ist, der über den dahinterliegenden Abschnitt (27) der Rastzunge (24) in die Einführöffnung (11) vorsteht.

10. Beschlag (1) zum Verbinden zweier Teile (2, 3), insbesondere Frontblendenbeschlag, mit einem Beschlagteil (4) nach einem der vorhergehenden Ansprüche und mit mindestens zwei Bolzen (6), die einen gegenüber einem angrenzenden Schaftabschnitt (7a) verbreiterten, vorderen Bolzenkopf (8) aufweisen.

11. Beschlag nach Anspruch 10, **gekennzeichnet durch** mindestens zwei Muffen (20), in denen die hinteren Bolzenköpfe (9) der Bolzen (6) jeweils verankerbar sind.

12. Anordnung mit zwei Teilen (2, 3), insbesondere Möbelplatten, die mittels des Beschlags (1) nach Anspruch 10 oder 11 aneinander befestigt sind, wobei die Bolzen (6) an dem einen, ersten Teil (2) verankert sind und wobei das andere Teil (3) eine Tieflochbohrung (17), in die das Beschlagteil (4) eingesetzt ist, und Querbohrungen (18), die einenends in eine Stirnseite des zweiten Teils (3) und anderenends in die Tieflochbohrung (17) münden, aufweist und wobei die durch die Querbohrungen (18) hindurch bis in die Einführöffnungen (11) des Beschlaggehäuses (5) eingeführten, vorderen Bolzenköpfe (8) von der Anzugskontur (14) des Beschlaggehäuses (5) weiter nach innen gezogen sind und dadurch die beiden Teile (2, 3) miteinander verspannt sind.

## Claims

1. A fitting part (4) of a fitting (1) for connecting two parts (2, 3), in particular furniture panels, with a rod-shaped fitting housing (5), which comprises at least two axially spaced keyholes (10), each comprising an insertion opening (11) for inserting a bolt head and a circumferential slot (12) that adjoins the insertion opening (11) on one side in a circumferential direction and is narrowed relative to the insertion opening (11) for engaging behind a bolt head, as well as a rotary handle (16), wherein a slot wall (13) of the fitting housing (5) that defines the circumferential slot (12) has, on its inner side, a tightening contour (14) whose distance from the longitudinal axis (15) of the fitting housing (5) decreases in the circumferential direction,
wherein the fitting housing (5) is composed of, in particular plugged together by, several modules (28), at least some of which, in particular all of which, each have at least one keyhole (10) with a tightening contour (14), **characterized in that** the modules (28) each have an insertion pin (29) at one end of the module and an insertion opening (30) at the opposite other end of the module.

2. The fitting part according to claim 1, **characterized in that** the fitting housing (5) has a circular outer diameter.

3. The fitting part according to any one of the preceding claims, **characterized in that** the fitting housing (5) is a one-piece cast component made of metal or plastic.

4. The fitting part according to any one of the preceding claims, **characterized in that** the tightening contour (14) has a tightening rotation angle of between 90° and 180°, in particular of approximately 140°.

5. The fitting part according to any one of the preceding claims, **characterized in that** at the insertion openings (11), in particular on one of the two axial sides of the insertion openings (11), there is, in each case, an elastically deflectable locking tongue (24), the free front end (26) of which extends laterally further into the insertion opening (11) than a section (27) of the locking tongue (24) located behind it.

6. The fitting part according to claim 5, **characterized in that** the locking tongues (24) are formed in one piece with the fitting housing (5), in particular integrally molded thereon.

7. The fitting part according to claim 5, **characterized in that** the locking tongues (24) are each formed, in particular integrally molded, on a separate locking element (22) made of plastic.

8. The fitting part according to claim 7, **characterized in that** the fitting housing (5) has, on one of the two axial sides of the insertion openings (11), one recess (21) each, which opens radially outwards and leads into the respective insertion opening (11), into which the locking element (22) is inserted.

9. The fitting part according to any one of claims 5 through 8, **characterized in that** the front end (26) of the locking tongue (24) is formed by a locking projection that protrudes into the insertion opening (11) beyond the section (27) of the locking tongue (24) located behind it.

10. A fitting (1) for connecting two parts (2, 3), in particular a front panel fitting, comprising a fitting part (4) according to any one of the preceding claims and at least two bolts (6) having a front bolt head (8) that is widened relative to an adjacent shaft section (7a).

11. The fitting according to claim 10, **characterized by** at least two sleeves (20) in which the rear bolt heads (9) of the bolts (6) can each be anchored.

12. An arrangement comprising two parts (2, 3), in particular furniture panels, which are attached to each other by means of the fitting (1) according to claim 10 or 11, wherein the bolts (6) are anchored to the first part (2) and wherein the other part (3) has a deep hole (17) into which the fitting part (4) is inserted, and transverse holes (18) that lead at one end into an end face of the second part (3) and at the other end into the deep hole (17), and wherein the front bolt heads (8), which have been inserted through the transverse holes (18) into the insertion openings (11) of the fitting housing (5) are pulled further inward by the tightening contour (14) of the fitting housing (5), thereby clamping the two parts (2, 3) together.

## Revendications

1. Élément de ferrure (4) d'une ferrure (1) pour relier deux pièces (2, 3), en particulier des panneaux de meuble, avec un boîtier de ferrure en forme de tige (5), qui comprend au moins deux trous de serrure (10) espacés axialement, chacun avec une ouverture d'introduction (11) pour l'introduction d'une tête de boulon et avec une fente circonférentielle (12), qui est reliée d'un côté à l'ouverture d'introduction (11) dans une direction circonférentielle et qui est rétrécie par rapport à l'ouverture d'introduction (11), pour la prise par l'arrière d'une tête de boulon, ainsi qu'une poignée rotative (16), une paroi de fente (13) du boîtier de ferrure (5) définissant la fente circonférentielle (12) présentant, sur sa face intérieure, un contour de serrage (14) dont la distance à l'axe longitudinal (15) du boîtier de ferrure (5) diminue dans la direction circonférentielle, le boîtier de ferrure (5) étant assemblé, en particulier emboîté, à partir de plusieurs modules (28), dont au moins certains, en particulier tous, présentent chacun au moins un trou de serrure (10) avec contour de serrage (14), et **caractérisé en ce que** les modules (28) présentent chacun un tenon d'emboîtement (29) à une extrémité du module et une ouverture d'emboîtement (30) à l'autre extrémité opposée du module.

2. Élément de ferrure selon la revendication 1, **caractérisé en ce que** le boîtier de ferrure (5) présente un diamètre extérieur circulaire.

3. Élément de ferrure selon l'une quelconque des revendications précédentes, **caractérisé en ce que** le boîtier de ferrure (5) est une pièce moulée monobloc en métal ou en matière plastique.

4. Élément de ferrure selon l'une quelconque des revendications précédentes, **caractérisé en ce que** le contour de serrage (14) présente une course angulaire de serrage comprise entre 90° et 180°, en particulier d'environ 140°.

5. Élément de ferrure selon l'une quelconque des revendications précédentes, **caractérisé en ce qu'**aux ouvertures d'introduction (11), en particulier sur l'un des deux côtés axiaux des ouvertures d'introduction (11), est disposée dans chaque cas une languette d'arrêt élastiquement déformable (24), dont l'extrémité libre avant (26) fait saillie latéralement plus loin dans l'ouverture d'introduction (11) qu'une section (27) de la languette d'arrêt (24) située en arrière.

6. Élément de ferrure selon la revendication 5, **caractérisé en ce que** les languettes d'arrêt (24) sont formées d'une seule pièce sur le boîtier de ferrure (5), en particulier moulées d'une seule pièce.

7. Élément de ferrure selon la revendication 5, **caractérisé en ce que** les languettes d'arrêt (24) sont formées dans chaque cas sur un élément d'arrêt (22) séparé en matière plastique, en particulier moulées sur celui-ci.

8. Élément de ferrure selon la revendication 7, **caractérisé en ce que** le boîtier de ferrure (5) présente, sur l'un des deux côtés axiaux des ouvertures d'introduction (11), dans chaque cas un évidement (21) ouvert radialement vers l'extérieur et débouchant dans l'ouverture d'introduction (11) respective, dans lequel l'élément d'arrêt (22) est inséré.

9. Élément de ferrure selon l'une quelconque des revendications 5 à 8, **caractérisé en ce que** l'extrémité avant (26) de la languette d'arrêt (24) est formée par une saillie d'arrêt qui dépasse, par rapport à la section (27) de la languette d'arrêt (24) située en arrière, dans l'ouverture d'introduction (11).

10. Ferrure (1) pour relier deux pièces (2, 3), en particulier ferrure de façade, avec un élément de ferrure (4) selon l'une quelconque des revendications précédentes et avec au moins deux boulons (6), qui présentent une tête de boulon avant (8) élargie par rapport à une section de tige adjacente (7a).

11. Ferrure selon la revendication 10, **caractérisée par** au moins deux douilles (20), dans lesquelles les têtes de boulon arrière (9) des boulons (6) peuvent être ancrées respectivement.

12. Agencement avec deux pièces (2, 3), en particulier des panneaux de meuble, qui sont fixées l'une à l'autre au moyen de la ferrure (1) selon la revendication 10 ou 11, les boulons (6) étant ancrés sur l'une, première pièce (2), et l'autre pièce (3) présentant un perçage profond (17), dans lequel l'élément de ferrure (4) est inséré, et des perçages transversaux (18), qui débouchent d'une part dans une face frontale de la seconde pièce (3) et d'autre part dans le perçage profond (17), et les têtes de boulon avant (8), introduites à travers les perçages transversaux (18) jusqu'aux ouvertures d'introduction (11) du boîtier de ferrure (5), étant tirées plus à l'intérieur par le contour de serrage (14) du boîtier de ferrure (5), de sorte que les deux pièces (2, 3) sont serrées ensemble.
